Europäisches Patentamt

European Patent Office

Office européen des brevets

(11) Veröffentlichungsnummer: **0 169 191**
**B1**

(12) **EUROPÄISCHE PATENTSCHRIFT**

(51) Int. Cl.⁵: **E 04 B 1/84, B 32 B 7/14**

(45) Date of publication of patent specification: **26.09.90**

(21) Application number: **85890157.2**

(22) Date of filing: **16.07.85**

(54) Schalldämmendes, flächiges Bauelement.

(30) Priorität: **16.07.84 AT 2302/84**

(43) Veröffentlichungstag der Anmeldung:
**22.01.86 Patentblatt 86/04**

(45) Bekanntmachung des Hinweises auf die
Patenterteilung:
**26.09.90 Patentblatt 90/39**

(84) Benannte Vertragsstaaten:
**CH DE LI**

(56) Entgegenhaltungen:
**FR-A-2 482 643**
**GB-A- 349 968**
**GB-A-1 561 328**
**US-A-4 421 811**

(73) Patentinhaber: **KUNEX Türenwerk Gesellschaft m.b.H.**
**A-4531 Kematen/Krems (AT)**

(72) Erfinder: **Kunst, Rudolf**
**Dr. Fesslstrasse 13**
**A-4501 Neuhofen (AT)**

(74) Vertreter: **Boeckmann, Peter, Dipl.-Ing. et al**
**Patentanwälte Dipl.-Ing. Peter Boeckmann,**
**Dipl.-Ing. Leo Brauneiss Strohgasse 10**
**A-1030 Wien (AT)**

Courier Press, Leamington Spa, England.

**Beschreibung**

Die Erfindung bezieht sich auf ein schalldämmendes, flächiges Bauelement, aus zumindest zwei Schichten, z.B. für Türblätter, Trennwände, Vertäfelungen, Decken od.dgl., bei welchem zumindest zwei Schichten an ihren einander zugewendeten Flächen, zumindest über einen Abschnitt dieser Flächen, nur stellenweise dadurch miteinander verklebt sind, daß zwischen zumindest zweien der miteinander zu verklebenden Schichten eine dünne Zwischenlage liegt, die mit mehreren durchgehenden Öffnungen versehen ist, durch die der die Schichten verbindende Klebstoff zur Bildung der Verklebungsstellen hindurchgreift.

Der Aufbau schalldämmender flächiger Bauelemente in Schichtbauweise ist bekannt und es ist auch bereits bekannt, daß die Schalldämmung verbessert werden kann, wenn die Verklebung einander benachbarter Schichten nur stellenweise, vorzugsweise punktweise, erfolgt, da auf diese Weise die Übertragung des Körperschalles gedämmt wird. Die Praxis hat jedoch gezeigt, daß eine solche stellenweise, insbesondere punktweise, Verklebung in der Serienfertigung nur schwer zu kontrollieren ist, da sich ja der Klebstofffleck an der Anbringestelle verbreitert, sobald die beiden einander benachbarten Schichten zur Anlage aneinander kommen. Diese Verbreiterung führt zu einer Vergrößerung der Klebefläche, die im voraus nicht bestimmbar ist, da diese Vergrößerung nicht nur von der aufgebrachten Klebstoffmenge abhängig ist, sondern auch von der Beschaffenheit des Klebstoffes und vom Druck, mit welchem die beiden miteinander zu verklebenden Schichten aneinandergedrückt werden. Je größer aber die Fläche ist, über welche die beiden einander benachbarten Schichten miteinander verklebt sind, desto mehr wird der Körperschall von der einen Schicht auf die andere übertragen, d.h. desto schlechter ist das Schalldämmungsverhalten.

Um diesen Nachteil zu vermeiden, wurde bereits ein flächiges Bauelement vorgeschlagen (FR—A—2 482 643), bei welchem zumindest zwischen zweien der miteinander zu verklebenden Schichten eine dünne Zwischenlage liegt, die mit mehreren durchgehenden Öffnungen versehen ist, durch der die Schichten verbindende Klebstoff zur Bildung der Verklebungstellen hindurchgreift. Dadurch erfolgt eine Verklebung der beiden Schichten lediglich an vorbestimmten Stellen, nämlich an jenen, wo sich die Öffnungen befinden, wobei die Verklebungsfläche gleichfalls exakt vorbestimmt ist, da sich der Fläche der Öffnungen entspricht, auch dann, wenn der Anpreßdruck, mit welchem die beiden miteinander zu verklebenden Schichten verpreßt werden, sehr hoch ist. Es muß lediglich dafür Sorge getragen werden, daß die Zwischenlage so dünn ist, daß die aufgebrachte Klebstoffmenge durch die Öffnungen der Zwischenlage problemlos hindurchtreten kann.

Aus der US—PS 4 421 811 ist ein flächiges Bauelement in Sandwichbauweise bekannt geworden, bei welchem zwei Schichten eine Zell- oder Wabenstruktur aufweisen, wobei sich zwischen diesen beiden Schichten drei untereinander und mit diesen Schichten durch Kleben verbundene Zwischenschichten befinden, nämlich eine Zwischenschicht mit Perforationen sehr kleiner Abmessungen, eine Zwischenschicht aus porösem faserigen Material, beispielsweise Filz, und eine Zwischenschicht, die Öffnungen größeren Durchmessers aufweist. Durch diese Anordnng soll infolge von Reflexionen der Schallwellen an den einzelnen Schichten eine Lärmdämmung erzielt werden. Ein Hindurchgreifen des Klebstoffes durch die Perforationen bzw. Öffnungen findet hierbei nicht statt.

Die Abmessungen der Öffnungen in der Zwischenschicht sind bei der bekannten Anordnung auch wesentlich geringer als die Abmessungen der Zellen bzw. Waben.

Die Verwendung einer Schicht mit einer Zell- oder Wabenstruktur bringt Vorteile hinsichtlich Gewicht und Materialersparnis mit sich, jedoch ist es schwierig, bei einer derartigen Schicht die Verklebung genauf auf bestimmte Flächenbereiche zu begrenzen. Auch bei Verwendung einer dünnen Zwischenlage zwischen den zu verklebenden Schichten mit mehreren durchgehenden Öffnungen läßt sich diese Problem zunächst nicht lösen, da die Gefahr besteht, daß diese Öffnungen sich im Bereich der Zellen bzw. Waben befinden, sodaß dann der durch die Öffnungen hindurchtretende Klebstoff mit den die Zellen bzw. Waben bebrenzenden Wänden nicht in Kontakt kommt.

Die Erfindung hat sich somit zur Aufgabe gestellt, ein schalldämmendes flächiges Bauelement der eingangs beschriebenen Art derart zu verbessern, daß eine sichere Verbindung zwischen zwei miteinander zu verklebenden Schichten, von welchen eine eine Zell- oder Wabenstruktur aufweist, an genau vorbestimmten Stellen an einer vorbestimmten Fläche in kontrollierter Weise erfolgt, sodaß die theoretisch vorherberechneten Schalldämmungseigenschaften des Bauelementes auch bei Serienfertigung in der Praxis eingehalten werden. Die Erfindung löst diese Aufgabe dadurch, daß eine der miteinander zu verklebenden Schichten eine Zell- oder Wabenstruktur aufweist und daß der Durchmesser der Öffnungen der Zwischenlage größer ist als der Durchmesser der Zellen bzw. Waben. Dadurch ist sichergestellt, daß der durch die Öffnungen hindurchtretende Klebstoff auf die die Zellen bzw. Waben begrenzenden Wände trifft.

Die Erfindung bietet aber auch noch einen weiteren Vorteil: Da die Verklebung der Schichten im Bereich der Zwischenlage verläblich auf die Flächenbereiche der Öffnungen der Zwischenlage begrenzt ist, läßt sich bei sinnvoller Dimensionierung dieser Öffnungen bei den meisten Materialien der miteinander zu verklebenden Schichten eine Wiedertrennung der beiden miteinander verklebten Schichten erzielen. Dadurch läßt sich in vielen Fällen an Material sparen, z.B. bei Türen mit Ausschnitten, bei welchen die ausgeschnittenen Bereiche bzw. deren Schichten anderweitig wiederverwendet werden können, oder bei Türen mit Füllungen, bei welchen der Schichtaufbau im Bereich der Füllung ein anderer ist als im Bereich des die Füllung umgebenden Rahmens des Türblattes. Es läßt sich daher die Vorfertigung solcher Türen auf Lager auch auf solche Modelle erstrecken, bei denen bisher Sonderanfertigungen unumgänglich waren.

Ein weiterer Vorteil ergibt sich bei der Aufbringung des Klebstoffes auf die miteinander zu verklebenden Schichten: Während bisher die Klebstoffaufbringung an den Verklebungsstellen sowohl flächenmäßig als auch mengenmäßig genau durchgeführt werden mußte, kann nunmehr bei der Fertigung die eine der beiden miteinander zu verklebenden Schichten an ihrer Verklebungsfläche flächig bestrichen werden, wobei es weder flächenmäßige noch mengenmäßige Beschränkungen einzuhalten gilt. Die anschließend auf diese Fläche aufgebrachte Zwischenlage wird dann zwar mit dieser, den Klebstoff tragenden Schicht des Bauelementes flächig verklebt, was jedoch in den meisten Fällen nicht schadet bzw. sogar erwünscht ist. Wie bereits erwähnt, erfolgt jedoch die Verklebung der beiden die Zwischenlage einschließenden Schichten miteinander nur im Bereich der Öffnungen, durch welche der Klebstoff spätestens bei der flächigen Verpressung der miteinander zu verklebenden Schichten von Schicht zu Schicht hindurchgreift.

Gemäß einer bevorzugten Ausführungsform der Erfindung sind die Öffnungen über die Fläche der Zwischenlage gleichmäßig, vorzugsweise in einem regelmäßigen Muster, verteilt. Dies erleichtert nicht nur die Anbringung und Herstellung der Öffnungen, z.B. durch Stanzen, Bohren, Schneiden usw., sondern schafft auch gleichmäßige Klebeverhältnisse über einen größeren Bereich des Bauelementes. Es ist hierbei im Rahmen der Erfindung vorteilhaft, wenn die Öffnungen von kreisförmigen Löchern gebildet sind, da auf diese Weise der Klebstoffdurchtritt durch die Öffnungen am sichersten gewährleistet ist bzw. der Klebstoffeintritt in die Öffnungen her von allen Seiten in gleicher Weise im gleichen Maß stattfinden kann. Im allgemeinen brauchen die Öffnungen—im Vergleich zur Gesamtabmessung des Bauelementes—nur geringe Abmessungen zu haben. Stets werden Lochdurchmesser und Lochabstände von den vorliegenden Gegebenheiten bestimmt sein. Für viele Fälle genügen Lochdurchmesser von etwa 0,6 bis 1,1 cm und Lochabstände von 10 bis 20 cm. In Sonderfällen kann es jedoch zweckmäßig sein, von diesem allgemeinen Grundwerten abzuweichen, z.B. wenn aus Gründen einer innigeren Verklebung der beiden miteinander zu verklebenden Schichten eine festere Verbindung gewünscht ist und eine spätere Trennung weniger in Frage kommt.

In einzelnen Fällen kann es auch zweckmäßig sein, den Öffnungen eine besondere Gestalt zu geben, d.h. von der kreisrunden Lochform abzuweichen. Schlitzförmige oder sternförmige Öffnungen oder sonstige Sonderformen derselben können in bestimmten Fällen Vorteile bilden.

Die Zwischenlage muß nicht unbedingt die gesamte Fläche der miteinander zu verklebenden Schichten des Bauelementes bedecken. In bestimmten Fällen bietet es Vorteile, wenn die Zwischenlage nur einen Teil, insbesondere den Mittelteil, der einander zugewendeten Flächen der beiden miteinander verklebten Schichten bedeckt. Dies gilt z.B. für den schon erwähnten Fall eines Türblattes mit Füllung. In einem solchen Fall wird die Zwischenlage nur so groß gemessen als die Fläche der größten in Frage kommenden Füllung beträgt und es kann dann in diesem Bereich die Füllung mit beliebigen Maßen problemlos ausgeschnitten werden, wobei der ausgeschnittene Elementteil eine problemlose Trennung seiner Schichten erlaubt, so daß diese Schichten wiederverwendbar sind. Insbesondere bei Schichten aus edleren Materialien, z.B. Furnieren aus Edelhölzern usw., bietet dies wesentliche Vorteile.

Als Materialien für die Zwischenlage können alle Materialien Verwendung finden, die eine so dünne Gestaltung ermöglichen, daß der Klebstoffdurchtritt durch die Öffnungen verläßlich erfolgt. In Sonderfällen bieten im Rahmen der Erfindung Metallfolien oder Bleche, vorzugsweise aus Aluminium oder Stahl, Vorteile. Beispielsweise läßt sich durch eine Aluminiumfolie eine Dampfsperre im Bauelement erzielen. Durch ein Stahlblech läßt sich z.B. ein Türblatt einbruchssicherer gestalten. Für die erwähnte Dampfsperre braucht die Aluminiumfolie nur dünn gestaltet zu werden, so daß Ausschnitte aus dem Bauelement problemlos mit den hierfür üblichen Werkzeugen durchführbar sind.

In der Zeichnung sind Ausführungsbeispiele der Erfindung schematisch dargestellt.

Fig. 1 zeigt das Grundprinzip der Erfindung bei auseinandergezogenen Bestandteilen.

Fig. 2 zeigt in größerem Maßstab einen Querschnitt durch einen Abschnitt zweier miteinander verklebter Schichten.

Fig. 3 zeigt eine Draufsicht auf eine Ausführungsvariante eines Bauelementes.

Fig. 4 zeigt einen Abschnitt eines geschichteten Bauelementes vor der Herstellung eines Ausschnittes und Fig. 5 denselben Abschnitt nach der Herstellung eines Ausschnittes.

Fig. 6 zeigt eine bevorzugte Zellstruktur einer Schicht und Fig. 7 die Größenverhältnisse einer Öffnung im Vergleich zu einer Zellstruktur nach Fig. 6.

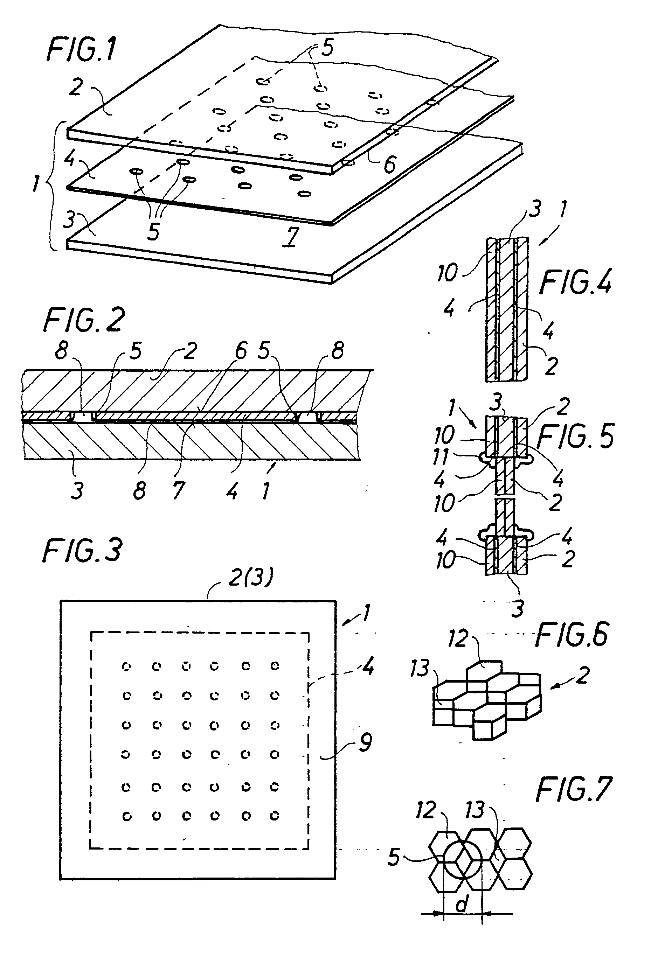

Zur Herstellung des in Fig. 1 dargestellten schalldämmenden Bauelementes 1 sind zwei flächige Schichten 2, 3 miteinander zu verkleben. Hierzu wird zwischen diesen beiden Schichten 2, 3 eine dünne, z.B. in Art einer Folie, eines Blattes oder eines Bleches ausgebildete, Zwischenlage 4 angeordnet, welche mit mehreren, über ihre Fläche in gleichmäßigen Abständen verteilten Öffnungen 5 versehen ist. Zumindest eine der einander zugewendeten Flächen 6 bzw. 7 der miteinander zu verklebenden Schichten 2, 3 wird mit einem Klebstoff, z.B. Leim, bestrichen. Sodann werden die einzelnen Schichten 2, 3, 4 aufeinandergelegt und aneinandergedrückt bzw. verpreßt. Dadurch gelangt der Klebstoff 8 (Fig. 2), welche in Fig. 2 der besseren Deutlichkeit halber mit übertrieben großer Schichtstärke dargestellt ist, durch die Öffnungen 5 hindurch zur jeweils anderen der miteinander zu verklebenden Schichten 2, 3, so daß sich letztlich eine stellweise, insbesondere punktweise, Verklebung der beiden Schichten 2, 3 durch die Öffnungen 5 hindurch ergibt. Dieses Hindurchtreten des Klebstoffes 8 durch die Öffnungen 5 ergibt sich automatisch durch den auf die Schicht des Klebstoffes 8 ausgeübten Druck.

Die Öffnungen 5 sind meistens von kreisunder Form, können in Sonderfällen jedoch auch andere Gestalt haben.

Bei der Ausführungsvariante nach Fig. 3 ist die Zwischenlage 4 kleiner als die beiden miteinander zu verklebenden Schichten, 2, 3, so daß die Zwischenlage 4 nur einen Teil, nämlich den Mittelteil der einander zugewendeten Flächen der beiden miteinander verklebten Schichten 2 bzw. 3 bedeckt. Der diesen Mittelteil rahmenartig umgebende Abschnitt 9 bildet somit einen Bereich, in welchem die beiden Schichten 2, 3 unmittelbar, d.h. nicht unter Zwischenschaltung der Zwischenlage 4 bzw. ihrer Löcher 5, miteinander verklebt sind. In diesem Bereich 9 ist daher eine spätere Trennung der miteinander verklebten Schichten 2, 3 im allgemeinen nicht mehr möglich, wogegen eine solche Trennung in dem der Größe der Zwischenlage 4 entsprechenden Mittelteil des Bauelementes 1 möglich ist. Diese Ausführungsform eignet sich für solche Bauelemente, in welchen gegebenenfalls später zumindest ein Ausschnitt vorzunehmen ist, also z.B. für Türblätter od. dgl. Wie ersichtlich, kann innerhalb des Flächenbereiches der Zwischenlage 4 der Ausschnitt mit beliebiger Form und Größe angeordnet werden, wobei in dem ausgeschnittenen Teil die miteinander verklebten Schichten 2, 3—geeignete Materialauswahl vorausgesetzt—problemlos voneinander trennbar und wiederverwendbar sind. Eine Anwendungsform hierfür zeigen die Fig. 4 und 5. Bei dieser Anwendungsform ist das Bauelement 1 ein Türblatt, welches als Schichten 2, 3 eine Kernschicht 3 und eine mit dieser über die Zwischenlage 4 verklebte Furnierschicht 2 aufweist. Auf der anderen Seite der Kernschicht 3 liegt eine weitere Furnierschicht 10, die mit der Kernschicht 3 über eine weitere Zwischenlage 4 in derselben Weise verklebt ist wie die beiden Schichten 2, 3. Wird nun im Bereich der Zwischenlagen 4 ein Ausschnitt aus diesem Türblatt ausgeschnitten, so können die Schichten 2, 3, 10 dieses Ausschnittes voneinander getrennt werden, da die punktweise Verklebung im Bereich der Öffnungen 5—geeigneten Klebstoff vorausgesetzt—im allgemeinen ohne Beeinträchtigung der Materialien der Schichten 2, 3, 10 zerstörbar ist. Es können daher die beiden von Furnieren gebildeten Schichten 2, 10 im Bereich dieses Ausschnittes wiedergewonnen und miteinander Rücken an Rücken verklebt werden, wodurch ein dem hergestellten Ausschnitt flächengleiches Einsatzstück entsteht, welches—gegebenenfalls unter Zwischenschaltung einer schwächeren Kernschicht—in die entstehende Öffnung des Bauelementes 1 einsetzbar ist (Fig. 5). Die Stoßstellen können durch Deckleisten 11 abgedeckt werden, wodurch sich zugleich eine Halterung des von den Schichten 2, 10 gebildeten Einsatzstückes ergibt. Es entsteht ein Türblatt 1 mit verwenktem Ausschnitt. Bei Verwendung von Furnieren stellt sich hierbei der Vorteil ein, daß sich die Zeichnung des Furnieres in der ursprünglichen Weise auch im von den Schichten 2, 10 gebildeten Einsatz fortsetzt, wenn nur dieser Einsatz mit seiner ursprünglichen Orientierung wieder in die Öffnung eingesetzt wird.

Selbstverständlich läßt sich das erfindungsgemäße Prinzip, wie schon die beschriebene Anwendung im Zusammenhang mit dem Bauelement nach den Fig. 4 und 5 zeigt, auch auf vielschichtige Bauelemente anwenden.

Ferner müssen die miteinander zu verklebenden Schichten nicht massiv sein. Fig. 6 zeigt z.B. eine Schicht 2, die eine Struktur aus miteinander zusammenhängenden größeren Waben 12 und kleineren Waben 13 hat. Die die einzelnen Waben 12, 13 voneinander trennenden Stege stehen normal zur Flächenausdehnung der Schicht 2. Beispielsweise hat ein Kraftkarton häufig eine solche Struktur, ebenfalls eine Stegplatte od. dgl. Auf alle Fälle müssen die Öffnungen 5, wie Fig. 7 zeigt, einen Durchmesser d haben, der größer ist als der größte Durchmesser der Waben 12 bzw. 13, um sicherzustellen, daß beim Hindurchtritt des Klebstoffes durch die Öffnung 5 dieser Klebstoff auf einen der Stege der Waben 12, 13 trifft.

Über die Zwischenlage 4 können—falls dies gewünscht ist—spezielle Eigenschaften in das Bauelement 1 hineingetragen werden, z.B. mittels einer Aluminiumfolie als Zwischenlage 4 ein besseres Stehvermögen (Verringerung der Verwindungen) des Bauelementes und eine bessere Stabilität desselben, weiters eine Dampfsperre. Stahlbleche eignen sich zur Vergrößerung der Einbruchssicherheit von Türen. Bei Vorliegen spezieller Materialkombinationen für die miteinander zu verklebenden Schichten kann es auch vorkommen, daß diese Schichten nicht oder nur schwer miteinander verklebbar sind, welcher Nachteil durch die Anordnung der Zwischenlage 4 behoben werden kann. Auf diese Weise ist es beispielsweise möglich, Gipskarton als Außenschicht auf einer Trägerschicht anzuordnen, z.B. für Täfelungen, Deckenelemente, Zierelemente usw.

Die in Fig. 2 dargestellte ganzflächige Verklebung der Schicht 3 mit der Zwischenlage 4 kann gegebenenfalls auch durch eine nur stellenweise Verklebung dieser beiden Schichten 3, 4 ersetzt werden.

Die Erfindung ist nicht auf bestimmte Materialien für die miteinander zu verklebenden Schichten beschränkt, wie sich aus Obigem ergibt.

Bevorzugte Materialien sind jedoch Natur- und Kunstholz, letzteres mit oder ohne Beigabe spezieller Füllstoffe.

## Patentansprüche

1. Schalldämmendes, flächiges Bauelement, aus zumindest zwei Schichten, z.B. für Türblätter, Trennwände, Vertäfelungen, Decken od.dgl., bei welchem zumindest zwei Schichten (2, 3) an ihren einander zugewendeten Flächen, zumindest über einen Abschnitt dieser Flächen, nur stellenweise dadurch miteinander verklebt sind, daß zwischen zumindest zweien der miteinander zu verklebenden Schichten (2, 3) eine dünne Zwischenlage (4) liegt, die mit mehreren durchgehenden Öffnungen (5) versehen ist, durch die der die Schichten (2, 3) verbindende Klebstoff (8) zur Bildung der Verklebungsstellen hindurchgreift, dadurch gekennzeichnet, daß eine der miteinander zu verklebenden Schichten (2, 3) eine Zell- oder Wabenstruktur aufweist und daß der Durchmesser (d) der Öffnungen (5) der Zwischenlage (4) größer ist als der Durchmesser der Zellen bzw. Waben (12, 13).

2. Bauelement nach Anspruch 1, dadurch gekennzeichnet, daß die Öffnungen (5) über die Fläche der Zwischenlage (4) gleichmäßig, vorzugsweise in einem regelmäßigen Muster, verteilt sind.

3. Bauelement nach Anspruch 1 oder 2, dadurch gekennzeichnet, daß die Öffnungen (5) von kreisförmigen Löchern gebildet sind.

4. Bauelement nach einem der Ansprüche 1 bis 3, dadurch gekennzeichnet, daß die Zwischenlage (4) nur einen Teil, insbesondere den Mittelteil, der einander zugewendeten Flächen (6, 7) der beiden miteinander verklebten Schichten (2, 3) bedeckt.

5. Bauelement nach einem der Ansprüche 1 bis 4, dadurch gekennzeichnet, daß eine der miteinander zu verklebenden Schichten (2, 3) eine Kraftkartonlage oder eine Stegplatte ist.

6. Bauelement nach einem der Ansprüche 1 bis 5, dadurch gekennzeichnet, daß die Zwischenlage (4) aus einer Metallfolie oder einem Blech, vorzugsweise aus Aluminium oder Stahl, besteht.

## Revendications

1. Elément de construction insonorisant et en nappe, d'au moins deux couches, p.e. pour vantails de porte, cloisons, lambris, plafonds etc., dans lequel au moins deux couches (2, 3) ne sont collées l'une à l'autre à leurs surfaces tournées l'une vers l'autre au moins sur une partie desdites surfaces que localement par l'entreposage d'une couche intermédiaire mince (4) pourvue de plusieurs orifices (5) traversants par lesquels la colle (8) pénètre pour former les points de collage entre au moins deux des couches (2, 3) à coller mutuellement, caractérisé en ce qu'une des couches (2, 3) à coller mutuellement est d'une structure cellulaire ou alvéolée et que le diamètre (d) des orifices (5) de la couche intermédiaire (4) est plus grand que le diamètre des cellules ou alvéoles (12, 13).

2. Elément de construction selon la revendication 1, caractérisé en ce que les orifices (5) sont distribués sur la surface de la couche intermédiaire (4) uniformement, de préférence dans un dessin régulier.

3. Elément de construction selon la revendication 1 ou 2, caractérisé en ce que les orifices (5) sont formés par des trous circulaires.

4. Elément de construction selon une des revendications 1 à 3, caractérisé en ce la couche intermédiaire (4) ne courvre qu'une partie, en particulier la partie centrale, des surfaces (6, 7) tournées l'une vers l'autre des deux couches (2, 3) mutuellement collées.

5. Elément de construction selon une des revendications 1 à 4, caractérisé en ce qu'une des couches (2, 3) à coller mutuellement est une couche en paiper kraft ou une plaque à âmes.

6. Elément de construction selon une des revendications 1 à 5, caractérisé en ce que la couche intermédiaire (4) consiste en une feuille de métal ou une tôle en aluminium ou en acier.

## Claims

1. A sound-absorbing, tabular structural element consisting of at least two layers, for instance for door leaves, partitions, panels, wainscots, ceilings or the like, in which at least two layers (2, 3) are glued to one another only locally on their surfaces facing one another over at least a portion of these surfaces by interposing a thin intermediate layer (4) provided with a plurality of through-going openings (5) through which the adhesive (8) for forming the adhesion sites penetrates, characterized in that one of the layers (2, 3) to be glued to one another has a cellular or honeycomb structure and that the diameter (d) of the openings (5) of the intermediate layer (4) is greater than the diameter of the cells or honeycombs (12, 13).

2. The structural element according to claim 1, characterized in that the openings (5) are distributed over the surface of the intermediate layer (4) uniformly, preferably in a regular pattern.

3. The structural element according to claim 1 or 2, characterized in that the openings (5) are formed by circular holes.

4. The structural element according to any one of the claims 1 to 3, characterized in that the intermediate layer (4) covers only a portion, preferably the central portion, of the surfaces (6, 7) facing one another of the two layers (2, 3) glued to one another.

5. The structural element according to any one of the claims 1 to 4, characterized in that one of the layers (2, 3) to be glued to one another is a kraft paper layer or a web plate.

6. The structural element according to any one of the claims 1 to 5, characterized in that the intermediate layer (4) consists of a metal foil or a metal sheet, preferably of aluminum or steel.

FIG.1

2

4

1

3

5

5

6

7

FIG.2

8 5 2 6 5 8

3 8 7 4 1

FIG.3

2(3)

1

4

9

FIG.4

3 1

10

4

4

2

FIG.5

1

10 3 2

11

4 4

10 2

4 4

10 2

3

FIG.6

12

13

2

FIG.7

12 13

5

d